# EUROPÄISCHE PATENTSCHRIFT

(11) **EP 3 815 237 B1**
(45) Veröffentlichungstag und Bekanntmachung des Hinweises auf die Patenterteilung: **17.12.2025**
(21) Anmeldenummer: 19728682.6
(22) Anmeldetag: 05.06.2019
(51) Int. Cl.: H02P 29/028, H02P 6/182, H02P 3/22, B60L 3/00, H02P 21/18, H02P 29/032, H02P 1/02, H02P 21/12

(54) **VERFAHREN UND VORRICHTUNG ZUR BESTIMMUNG EINER LAGE UND DREHZAHL EINES ROTORS EINER ELEKTRISCHEN MASCHINE**
METHOD AND DEVICE FOR DETERMINING THE POSITION AND THE ROTATIONAL SPEED OF A ROTOR OF AN ELECTRICAL MACHINE
PROCÉDÉ ET DISPOSITIF DE DÉTERMINATION DE LA POSITION ET DE LA VITESSE DE ROTATION D'UN ROTOR D'UNE MACHINE ÉLECTRIQUE

(30) Priorität: 29.06.2018 DE 102018210668
(43) Veröffentlichungstag der Anmeldung: 05.05.2021
(73) Patentinhaber: Robert Bosch GmbH, 70442 Stuttgart (DE)
(72) Erfinder: GOETTING, Gunther, 70499 Stuttgart (DE); CHEN, Lei, 70437 Stuttgart (DE)
(86) Internationale Anmeldenummer: PCT/EP2019/064573
(87) Internationale Veröffentlichungsnummer: WO 2020/001945

(56) Entgegenhaltungen:
- EP-A1- 1 195 611
- EP-A1- 1 195 611
- DE-A1- 102013 112 169
- DE-A1- 102013 112 169
- DE-A1- 102016 210 238
- DE-A1- 102016 210 238

## Beschreibung

Die vorliegende Erfindung betrifft ein Verfahren zur Bestimmung einer Lage und Drehzahl eines Rotors einer elektrischen Maschine während eines aktiven Kurzschlusses und eine entsprechende Rotorzustandsbestimmungsvorrichtung.

Elektrische Maschinen, wie beispielsweise permanent erregte Synchronmaschinen, finden in zahlreichen technischen Bereichen Einsatz. Beispielsweise werden solche permanent erregten Synchronmaschinen in Kraftfahrzeugen insbesondere Elektro- und Hybridfahrzeuge eingesetzt.

### Stand der Technik

Aus der WO 2016/066330 ist ein Verfahren und eine Vorrichtung zum Umschalten aus dem Freilauf-Betriebszustand einer elektrischen Maschine in einen Kurzschluss-Betriebszustand bekannt.

Der Hintergrund der Erfindung liegt darin, dass die elektrische Maschine bei einem Ausfall der Rotorlagesensoren bei einer Drehzahl des Rotors innerhalb eines Notlaufdrehzahlbereiches in den Notbetrieb schaltet. Um Schäden an der elektrischen Maschine zu vermeiden wird oberhalb einer Notlaufdrehzahl, automatisch in einen aktiven Kurzschluss geschaltet. Ein Betrieb der elektrischen Maschine in einem Notbetrieb ist dadurch jedoch nicht möglich.

Es ist daher die Aufgabe der vorliegenden Erfindung, ein Verfahren und eine Vorrichtung bereitzustellen, mit dem bei einem Ausfall von Rotorlagesensoren die Lage und die Drehzahl des Rotors einer elektrischen Maschine während eines aktiven Kurzschlusses bestimmbar ist, so dass ein sicherer Übergang in den Notbetrieb möglich ist.

Die Druckschriften EP 1 195 611 A1; DE 10 2016 210238 A1; DE 10 2013 112169 offenbaren unterschiedliche Verfahren und Vorrichtungen zur Bestimmung von Lage und Drehzahl elektrischer Maschinen in unterschiedlichen Anwendungen.

### Offenbarung der Erfindung

Die Aufgabe wird durch ein Verfahren zum Bestimmung einer Lage und Drehzahl eines Rotors einer elektrischen Maschine während eines aktiven Kurzschlusses mit den Merkmalen nach Anspruch 1 gelöst. Hinsichtlich einer Vorrichtung zur Durchführung eines solchen Verfahrens wird auf Anspruch 5 verwiesen. Die jeweils rückbezogenen abhängigen Ansprüche geben vorteilhafte Weiterbildungen der Erfindung wieder.

Das Verfahren nach der Erfindung umfasst die Schritte des Bestimmens der sich beim Kurzschluss ergebenden Kurzschlussströme, des Bestimmens eines sich aus den Kurzschlussströmen ergebenden Gesamtstromes, des Bestimmens eines Statorstromwinkels des Gesamtstromes zu einem Statorkoordinatensystem, des Bestimmens eines Rotorstromwinkels des Gesamtstromes zu einer Flussrichtung des Rotors. Dieser umfasst dabei die Schritte des Berechnens einer betragsmäßigen Größe des Gesamtstromes, des Bestimmens des Rotorstromwinkels anhand einer für die elektrische Maschine erstellten charakteristischen Abhängigkeit zwischen dem betragsmäßigen Gesamtstrom und einem Rotorstromwinkel, wobei die Rotorlage einer Summe von Statorstromwinkel und Rotorstromwinkel entspricht und wobei sich die Rotordrehzahl aus einer Überwachung der Rotorlage ergibt.

Als Lage des Rotors im Sinne der vorliegenden Erfindung wird die Position des Rotors relativ zu einem Stator verstanden. Diese Position ist dabei bevorzugt als Winkel angegeben. Dementsprechend ist die Drehzahl des Rotors ebenfalls als relative Bewegung des Rotors zu dem Stator zu verstehen. Als Statorstromwinkel beziehungsweise Rotorstromwinkel wird dabei ein Winkel zwischen Stator beziehungsweise Rotor und einem Gesamtstrom verstanden.

Der Vorteil der Erfindung liegt darin, dass auch bei Ausfall der Rotorlagesensoren die Lage und die Rotordrehzahl ermittelt werden kann. Dadurch kann die elektrische Maschine während des aktiven Kurzschlusses sicher in einen Notbetrieb überführt werden. Bei Erreichen einer Notlaufdrehzahl kann somit der Notbetrieb gestartet werden ohne das es zu Schäden an der elektrischen Maschine kommt.

In einer bevorzugten Ausführung der Erfindung wird die charakteristische Abhängigkeit durch in Beziehung bringen der drehzahlabhängigen Werte von betragsmäßigen Gesamtstrom und von Rotorstromwinkel ermittelt. Dadurch ist es möglich, durch Ermitteln eines betragsmäßigen Gesamtstroms einen Rotorstromwinkel zu berechnen.

In einer weiteren bevorzugten Ausführung der Erfindung wird ein Rotorlagenglättwert aus einer Glättung einer Vielzahl an Rotorlagewerten ermittelt. Dadurch können Ungenauigkeiten durch große Abweichungen bei einzelnen Werten minimiert werden. Ein Messwertrauschen wird dadurch reduziert, so dass die Genauigkeit der ermittelten Rotorlage erhöht wird.

Das Verfahren umfasst vorzugsweise einen Schritt, bei welchem die ermittelte Rotorlage und/oder Rotordrehzahl mit Sensorinformationen verglichen wird. Dadurch kann ein Defekt eines Sensors nochmals verifiziert werden.

Die Erfindung umfasst zusätzlich eine Rotorzustandsbestimmungsvorrichtung, die eingerichtet ist, das erfindungsgemäße Verfahren auszuführen. Die Rotorzustandsbestimmungsvorrichtung umfasst dabei eine Strombestimmungseinheit, zum Bestimmen der sich beim Kurzschluss ergebenden Kurzschlussströme, eine Gesamtstrombestimmungseinheit, zum Bestimmen eines sich aus den Kurzschlussströmen ergebenden Gesamtstromes, eine Statorstromwinkelbestimmungseinheit, zum Bestimmen eines Statorstromwinkels des Gesamtstromes zu einem Statorkoordinatensystem, eine Rotorstromwinkelbestimmungseinrichtung, zum Bestimmen eines Rotorstromwinkels des Gesamtstromes zu einer Flussrichtung des Rotors, wobei die Rotorstromwinkelbestimmungseinrichtung eine Berechnungseinheit zur Berechnung einer betragsmäßigen Größe des Gesamtstromes, und eine Stromwinkelkorrelationseinheit, zum Bestimmen des zum betragsmäßigen Gesamtstrom korrelierten Rotorstromwinkels, umfasst, eine Rotorlagebestimmungseinheit, zum Bestimmen einer Rotorlage, eine Rotordrehzahlbestimmungseinrichtung, zum Bestimmen einer Rotordrehzahl.

Mittels der Rotorzustandsbestimmungsvorrichtung kann das erfindungsgemäße Verfahren durchgeführt werden, so dass die zu diesem Verfahren genannten Vorteile erzielt werden können.

In einer bevorzugten Ausführungsform umfasst die Rotordrehzahlbestimmungseinrichtung eine Glättungseinheit. Mittels dieser Glättungseinheit kann das Verfahren zum Glätten von den Rotorlagewerten durchgeführt werden, so dass die Genauigkeit der ermittelten Rotorlagewerte erhöht wird.

In einer weiteren bevorzugten Ausführungsform ist die elektrische Maschine eine Permanent-Magneten-Synchronmaschine, eine elektrisch erregte Synchronmaschine oder eine Synchron Reluktanzmaschine. Die Permanent-Magneten-Synchronmaschine hat den Vorteil, dass sie einen hohen Wirkungsgrad und eine kleine Bauform aufweist. Die Synchron Reluktanzmaschine hat den Vorteil, dass bei der Herstellung gegenüber permanentmagneterregten Synchronmotoren keine Magnetwerkstoffe auf Basis sogenannter Seltene Erden-Werkstoffe Verwendung finden. Auch treten bei der Synchron Reluktanzmaschine nahezu keine Verluste im Läufer auf, dadurch hat sie einen guten Wirkungsgrad.

Vorzugsweise ist die elektrische Maschine dreiphasig. Der Vorteil solcher elektrischer Maschinen ist, dass diese eine hohe Dynamik, ein hohes Drehmoment und eine hohe Effizienz aufweisen.

Zum Ausführen des erfindungsgemäßen Verfahrens umfasst die Erfindung ein Computerprogrammprodukt mit Programmcodemitteln zur Durchführung des Verfahrens, wenn das Computerprogrammprodukt auf einer Steuereinheit einer Rotorzustandsbestimmungsvorrichtung.

Darüber hinaus umfasst die Erfindung ein maschinenlesbares Speichermedium, auf dem das Computerprogrammprodukt gespeichert ist.

Ausführungsbeispiele der Erfindung sind in der Zeichnung dargestellt und in der nachfolgenden Beschreibung näher erläutert. Es zeigt:
- Figur 1: Ausführungsbeispiel eines Verfahrens und einer Rotorzustandsbestimmungsvorrichtung zur Bestimmung einer Lage und Drehzahl eines Rotors einer elektrischen Maschine,
- Figur 2: Graphische Darstellung einer Lagebestimmung eines Rotors zu einem Stator am Beispiel einer dreiphasigen elektrischen Maschine,
- Figur 3: Diagramme zur Herleitung einer charakteristischen Abhängigkeit zwischen dem betragsmäßigen Gesamtstrom und einem Rotorstromwinkel, und
- Figur 4: Diagramm der charakteristischen Abhängigkeit zwischen dem betragsmäßigen Gesamtstrom und einem Rotorstromwinkel.

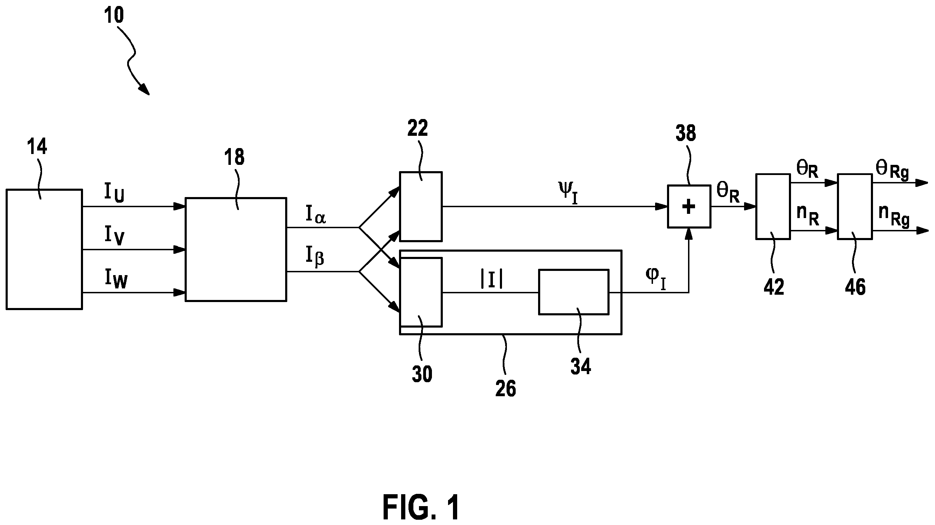

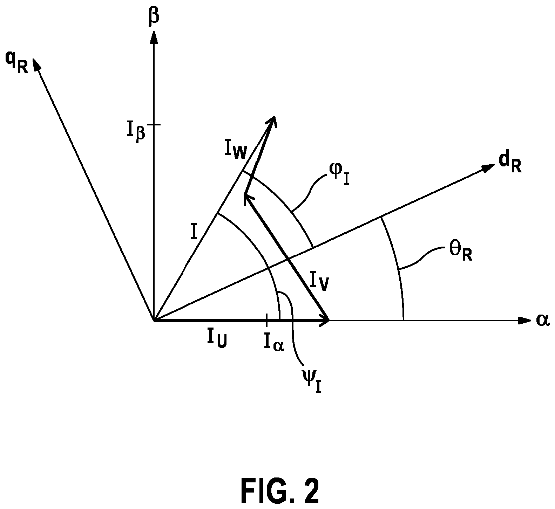

Figur 1 zeigt ein Ausführungsbeispiel eines Verfahrens und ein Ausführungsbeispiel einer Rotorzustandsbestimmungsvorrichtung 10 zur Bestimmung einer Lage Θ_{R} und Drehzahl n_{R} eines Rotors (nicht gezeigt) einer elektrischen Maschine (nicht gezeigt). In einer Strombestimmungseinheit 14 werden dazu die sich während eines aktiven Kurzschlusses ergebenden Kurzschlussströme I_{U}, I_{V}, I_{W} am Beispiel einer dreiphasigen elektrischen Maschine bestimmt. Die sich ergebenden Kurzschlussströme I_{U}, I_{V}, I_{W} sind in Figur 2 dargestellt. In einer Gesamtstrombestimmungseinheit 18 der Rotorzustandsbestimmungsvorrichtung 10 wird anschließen ein sich aus den Kurzschlussströmen I_{U}, I_{V}, I_{W} ergebender Gesamtstrom I_{α}, I_{β} bestimmt. Eine graphische Bestimmung des Gesamtstroms I_{α}, I_{β} aus den für einen dreiphasigen Motor um 120° versetzten Kurzschlussströmen I_{U}, I_{V}, I_{W} ist in Figur 2 dargestellt.

Eine Statorstromwinkelbestimmungseinheit 22 bestimmt einen als Statorstromwinkel ψ_{I} bezeichneten und in Figur 2 gezeigten Winkel des Gesamtstromes I_{α}, I_{β} zu einem Statorkoordinatensystem α, β. Über diesen Statorstromwinkel ψ_{I} ist eine Stromrichtung des Gesamtstromes I_{α}, I_{β} zu dem Statorkoordinatensystem α, β angegeben. Die Rotorzustandsbestimmungsvorrichtung 10 umfasst zusätzlich eine Rotorstromwinkelbestimmungseinrichtung 26, welche eine Berechnungeinheit 30 umfasst, in welcher eine betragsmäßige Größe I des Gesamtstromes I_{α}, I_{β} berechnet wird.

Darüber hinaus umfasst die Rotorstromwinkelbestimmungseinrichtung 26 eine Stromwinkelkorrelationseinheit 34, welche einen Rotorstromwinkels φ_{I} anhand einer für die elektrische Maschine erstellten charakteristischen Abhängigkeit zwischen dem von der Berechnungeinheit 30 bestimmten betragsmäßigen Gesamtstrom I und einem Rotorstromwinkel φ_{I} bestimmt.

Wie in Figur 2 gezeigt, gibt der Rotorstromwinkel φ_{I} den Winkel zwischen dem Gesamtstromes I_{α}, I_{β} und einer Flussrichtung d_{R} des Rotors an. Die Rotorzustandsbestimmungsvorrichtung 10 umfasst zusätzlich eine Rotorlagebestimmungseinheit 38, welche aus einer Summe von Statorstromwinkel ψ_{I} und Rotorstromwinkel φ_{I} die Rotorlage Θ_{R} berechnet. Die Rotorlage Θ_{R} entspricht, wie in Figur 2 gezeigt, dem Winkel zwischen der Flussrichtung d_{R} des Rotors zum Stator. Mittels einer Rotordrehzahlbestimmungseinrichtung 42 wird durch Überwachung der Rotorlage Θ_{R} die Rotordrehzahl n_{R} bestimmt.

Aus einer Vielzahl an Rotorlagenwerten Θ_{R} und Rotordrehzahlwerten n_{R} wird in einer Glättungseinheit 46 ein Rotorlagenglättwert Θ_{Rg} und Rotordrehzahlglättwert n_{Rg} berechnet. Dadurch können Ungenauigkeiten durch große Abweichungen bei einzelnen Werten minimiert werden.

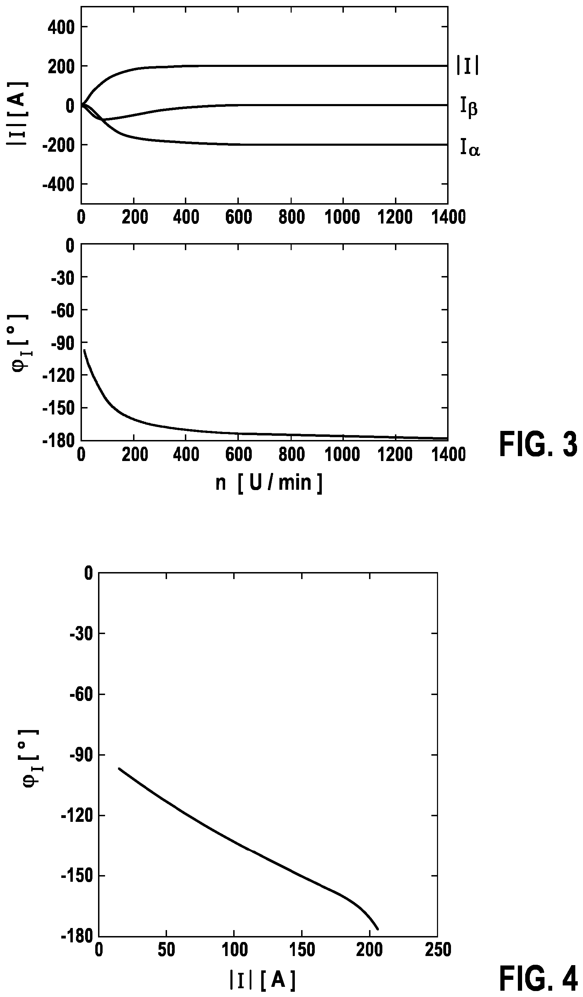

Figur 3 zeigt Diagramme zur Herleitung einer charakteristischen Abhängigkeit zwischen dem betragsmäßigen Gesamtstrom I und einem Rotorstromwinkel φ_{I}. Dazu ist für eine elektrische Maschine in Abhängigkeit der Maschinendrehzahl n, jeweils der aus dem Gesamtstrom I_{α}, I_{β} ermittelte betragsmäßige Gesamtstrom I und der Rotorstromwinkel φ_{I} bestimmt worden. Diese dabei ermittelten drehzahlabhängigen Werte sind für jede elektrische Maschine unterschiedlich und charakterisieren diese.

Über die gleichen Maschinendrehzahlwerte n können der betragsmäßige Gesamtstrom I und der Rotorstromwinkel φ_{I} in Beziehung zueinander gebracht werden ohne das eine Drehzahl bekannt ist. Eine solche Beziehung beider Werte ist in Figur 4 gezeigt. In dieser Figur ist die charakteristischen Abhängigkeit zwischen dem betragsmäßigen Gesamtstrom I und dem Rotorstromwinkel φ_{I} gezeigt. Über dieses Diagramm ermittelt die Stromwinkelkorrelationseinheit 34 aufgrund des betragsmäßigen Gesamtstroms I den dazu gehörigen Rotorstromwinkel φ_{I}.

## Patentansprüche

1. Verfahren zur Bestimmung einer Lage (Θ_{R}) und Drehzahl (n_{R}) eines Rotors einer elektrischen Maschine, während eines aktiven Kurzschlusses,
wobei die Rotorlage (Θ_{R}) des Rotors dem Winkel zwischen der Flussrichtung (d_{R}) des Rotors zum Stator entspricht,
wobei das Verfahren die Schritte umfasst:
- Bestimmen der sich beim Kurzschluss ergebenden Kurzschlussströme (I_{U}, I_{V}, I_{W}),
- Bestimmen eines sich aus den Kurzschlussströmen (I_{U}, I_{V}, I_{W}) ergebenden Gesamtstromes (I_{α}, I_{β}),
- Bestimmen eines Statorstromwinkels (ψ_{I} des Gesamtstromes (I_{α}, I_{β}) zu einem Statorkoordinatensystem (α, β),
**gekennzeichnet durch** die Schritte:
- Bestimmen eines Rotorstromwinkels (φ_{I}) des Gesamtstromes (I_{α}, I_{β}) zu einer Flussrichtung (d_{R}) des Rotors, wobei dieser Schritt die Schritte umfasst:
- Berechnen einer betragsmäßigen Größe (I) des Gesamtstromes (I_{α}, I_{β}),
- Bestimmen des Rotorstromwinkels (φ_{I}) anhand einer für die elektrische Maschine erstellten charakteristischen Abhängigkeit zwischen dem betragsmäßigen Gesamtstrom (I) und einem Rotorstromwinkel (φ_{I}),
wobei die Rotorlage (Θ_{R}) einer Summe von Statorstromwinkel (ψₗ) und Rotorstromwinkel (φ_{I}) entspricht und wobei sich die Rotordrehzahl (n_{R}) aus einer Überwachung der Rotorlage (Θ_{R}) ergibt.

2. Verfahren zur Bestimmung einer Lage (Θ_{R}) und Drehzahl (n_{R}) eines Rotors einer elektrischen Maschine nach Anspruch 1, **dadurch gekennzeichnet, dass** die charakteristische Abhängigkeit durch in Beziehung bringen der drehzahlabhängigen Werte von betragsmäßigen Gesamtstrom (I) und von Rotorstromwinkel (φ_{I}) ermittelt wird.

3. Verfahren zur Bestimmung einer Lage (Θ_{R}) und Drehzahl (n_{R}) eines Rotors einer elektrischen Maschine nach Anspruch 1 oder 2, **dadurch gekennzeichnet, dass** ein Rotorlagenglättwert (Θ_{Rg}) aus einer Glättung einer Vielzahl an Rotorlagewerten (Θ_{R}) ermittelt wird.

4. Verfahren zur Bestimmung einer Lage (Θ_{R}) und Drehzahl (n_{R}) eines Rotors einer elektrischen Maschine nach einem der vorherigen Ansprüche, **dadurch gekennzeichnet, dass** das Verfahren einen Schritt umfasst, bei welchem die ermittelte Rotorlage (Θ_{R}) und/oder Rotordrehzahl (n_{R}) mit Sensorinformationen verglichen wird.

5. Rotorzustandsbestimmungsvorrichtung (10)
zur Bestimmung einer Lage (Θ_{R}) und Drehzahl (n_{R}) eines Rotors einer elektrischen Maschine, während eines aktiven Kurzschlusses, wobei die Rotorlage (Θ_{R}) des Rotors dem Winkel zwischen der Flussrichtung (d_{R}) des Rotors zum Stator entspricht,
wobei die Rotorzustandsbestimmungsvorrichtung (10) eingerichtet ist, das Verfahren nach einem der vorherigen Ansprüche auszuführen, umfassend:
- eine Strombestimmungseinheit (14), zum Bestimmen der sich beim Kurzschluss ergebenden Kurzschlussströme (I_{U}, I_{V}, I_{W}),
- eine Gesamtstrombestimmungseinheit (18), zum Bestimmen eines sich aus den Kurzschlussströmen (I_{U}, I_{V}, I_{W}) ergebenden Gesamtstromes (I_{α}, I_{β}),
- eine Statorstromwinkelbestimmungseinheit (22), zum Bestimmen eines Statorstromwinkels (ψ_{I}) des Gesamtstromes (I_{α}, I_{β}) zu einem Statorkoordinatensystem (α, β),
**gekennzeichnet durch**
- eine Rotorstromwinkelbestimmungseinrichtung (26), zum Bestimmen eines Rotorstromwinkels (φ_{I}) des Gesamtstromes (I_{α}, I_{β}) zu einer Flussrichtung (d_{R}) des Rotors, wobei die Rotorstromwinkelbestimmungseinrichtung (26)
- eine Berechnungseinheit (30) zur Berechnung einer betragsmäßigen Größe (I) des Gesamtstromes (I_{α}, I_{β}), und
- eine Stromwinkelkorrelationseinheit (34), zum Bestimmen des zum betragsmäßigen Gesamtstrom (I) korrelierten Rotorstromwinkels (φ_{I}), umfasst,
- eine Rotorlagebestimmungseinheit (38), zum Bestimmen einer Rotorlage (Θ_{R}),
- eine Rotordrehzahlbestimmungseinrichtung (42), zum Bestimmen einer Rotordrehzahl (n_{R}).

6. Rotorzustandsbestimmungsvorrichtung (10) nach Anspruch 5, **dadurch gekennzeichnet, dass** die Rotordrehzahlbestimmungseinrichtung (42) eine Glättungseinheit (46) umfasst.

7. Rotorzustandsbestimmungsvorrichtung (19) nach Anspruch 5 oder 6,
**dadurch gekennzeichnet, dass** die elektrische Maschine eine Permanent-Magneten-Synchronmaschine, eine elektrisch erregte Synchronmaschine oder eine Synchron Reluktanzmaschine ist.

8. Rotorzustandsbestimmungsvorrichtung (10) nach einem der Ansprüche 5 bis 7, **dadurch gekennzeichnet, dass** die elektrische Maschine dreiphasig ist.

9. Computerprogrammprodukt mit Programmcodemitteln zur Durchführung des Verfahrens nach einem der Ansprüche 1 bis 4, wenn das Computerprogrammprodukt auf einer Steuereinheit (14, 18, 22, 26, 38, 42) einer Rotorzustandsbestimmungsvorrichtung (10) nach einer der Ansprüche 5 bis 8 abläuft.

10. Maschinenlesbares Speichermedium, auf dem das Computerprogrammprodukt nach Anspruch 9 gespeichert ist.

## Claims

1. Method for determining a position (Θ_{R}) and rotational speed (n_{R}) of a rotor of an electric machine during an active short circuit,
wherein the rotor position (Θ_{R}) of the rotor corresponds to the angle between the direction of flow (d_{R}) of the rotor and the stator,
wherein the method comprises the steps:
- determining the short circuit currents (I_{U}, I_{V}, I_{W}) occurring during the short circuit,
- determining a total current (I_{α}, I_{β}), arising from the short circuit currents (I_{U}, I_{V}, I_{W}),
- determining a stator current angle (ψₗ) of the total current (I_{α}, I_{β}) with respect to a stator coordinate system (α, β),
**characterized by** the steps of:
- determining a rotor current angle (ϕ_{I}) of the total current (I_{α}, I_{β}) with respect to a direction of flow (d_{R}) of the rotor, wherein this step comprises the steps:
- calculating an absolute-value variable (I) of the total current (I_{α}, I_{β}),
- determining the rotor current angle (ϕ_{I}) on the basis of a characteristic dependence, produced for the electric machine, between the absolute-value total current (I) and a rotor current angle (ϕ_{I}),
wherein the rotor position (Θ_{R}) corresponds to a sum of the stator current angle (ψ_{I}) and the rotor current angle (ϕ_{I}), and wherein the rotor rotational speed (n_{R}) is obtained from monitoring the rotor position (Θ_{R}).

2. Method for determining a position (Θ_{R}) and rotational speed (n_{R}) of a rotor of an electric machine according to Claim 1, **characterized in that** the characteristic dependence is determined by relating to one another the rotational-speed-dependent values of absolute-value total current (I) and of the rotor current angle (ϕ_{I}).

3. Method for determining a position (Θ_{R}) and rotational speed (n_{R}) of a rotor of an electric machine according to Claim 1 or 2, **characterized in that** a rotor position smoothed value (Θ_{Rg}) is determined from smoothing a multiplicity of rotor position values (Θ_{R}).

4. Method for determining a position (Θ_{R}) and rotational speed (n_{R}) of a rotor of an electric machine according to one of the preceding claims, **characterized in that** the method comprises a step in which the determined rotor position (Θ_{R}) and/or rotor rotational speed (n_{R}) are/is compared with sensor information.

5. Rotor state-determining device (10)
for determining a position (Θ_{R}) and rotational speed (n_{R}) of a rotor of an electric machine during an active short circuit, wherein the rotor position (Θ_{R}) of the rotor corresponds to the angle between the direction of flow (d_{R}) of the rotor and the stator,
wherein the rotor state-determining device (10) configured to carry out the method according to one of the preceding claims, comprising:
- a current-determining unit (14) for determining the short circuit currents (I_{U}, I_{V}, I_{W}) which occur during the short circuit,
- a total current-determining unit (18) for determining a total current (I_{α}, I_{β}), which results from the short circuit currents (I_{U}, I_{V}, I_{W}),
- a stator current angle-determining unit (22) for determining a stator current angle (ψ_{I}) of the total current (I_{α}, I_{β}) with respect to a stator coordinate system (α, β),
**characterized by**
- a rotor current angle-determining device (26) for determining a rotor current angle (ϕ_{I}) of the total current (I_{α}, I_{β}) with respect to a direction of flow (d_{R}) of the rotor, wherein the rotor current angle-determining device (26) comprises
- a calculation unit (30) for calculating an absolute-value variable (I) of the total current (I_{α}, I_{β}), and
- a current angle-correlation unit (34) for determining the rotor current angle (ϕ_{I}) which is correlated with the absolute-value total current (I),
- a rotor position-determining unit (38) for determining a rotor position (Θ_{R}),
- a rotor rotational speed-determining device (42) for determining a rotor rotational speed (n_{R}).

6. Rotor state-determining device (10) according to Claim 5, **characterized in that** the rotor rotational speed-determining device (42) comprises a smoothing unit (46).

7. Rotor state-determining device (19) according to Claim 5 or 6, **characterized in that** the electric machine is a permanent magnet synchronous machine, an electrically excited synchronous machine or a synchronous reluctance machine.

8. Rotor state-determining device (10) according to one of Claims 5 to 7, **characterized in that** the electric machine has three phases.

9. Computer program product having program code means for carrying out the method according to one of Claims 1 to 4 when the computer program product runs on a control unit (14, 18, 22, 26, 38, 42) of a rotor state-determining device (10) according to one of Claims 5 to 8.

10. Machine-readable storage medium on which the computer program product according to Claim 9 is stored.

## Revendications

1. Procédé de détermination d'une position (θ_{R}) et d'une vitesse de rotation (n_{R}) d'un rotor d'une machine électrique pendant un court-circuit actif,
dans lequel la position de rotor( θ_{R}) du rotor correspond à l'angle entre la direction de flux (d_{R}) du rotor par rapport au stator,
le procédé comprenant les étapes consistant à :
- déterminer les courants de court-circuit (I_{U}, I_{V}, I_{W}) qui se produisent en cas de court-circuit,
- déterminer un courant total (I_{α}, I_{β}) résultant des courants de court-circuit (I_{U}, I_{V}, I_{W}),
- déterminer un angle de courant de stator (ψᵢ) du courant total (I_{α}, I_{β}) par rapport à un système de coordonnées de stator (α, β),
**caractérisé par** les étapes consistant à :
- déterminer un angle de courant de rotor (φ_{I}) du courant total (I_{α}, I_{β}) par rapport à une direction de flux (d_{R}) du rotor, cette étape comprenant les étapes consistant à :
- calculer une valeur absolue (I) du courant total (I_{α}, I_{β}),
- déterminer l'angle de courant de rotor (φ_{I}) sur la base d'une dépendance caractéristique, établie pour la machine électrique, entre le courant total absolu (I) et un angle de courant de rotor (φ_{I}),
la position de rotor (θ_{R}) correspondant à une somme de l'angle de courant de stator (ψ_{I}) et de l'angle de courant de rotor (φ_{I}) et la vitesse de rotor (n_{R}) résultant d'une surveillance de la position de rotor (θ_{R}).

2. Procédé de détermination d'une position (θ_{R}) et d'une vitesse de rotation (n_{R}) d'un rotor d'une machine électrique selon la revendication 1, **caractérisé en ce que** la dépendance caractéristique est déterminée par une mise en relation des valeurs, dépendant de la vitesse de rotation, du courant total absolu (I) et de l'angle de courant de rotor (φ_{I}).

3. Procédé de détermination d'une position (θ_{R}) et d'une vitesse de rotation (n_{R}) d'un rotor d'une machine électrique selon la revendication 1 ou 2, **caractérisé en ce qu'**une valeur de lissage de position de rotor (θ_{Rg}) est déterminée à partir d'un lissage d'une pluralité de valeurs de position de rotor (θ_{R}).

4. Procédé de détermination d'une position (θ_{R}) et d'une vitesse de rotation (n_{R}) d'un rotor d'une machine électrique selon l'une quelconque des revendications précédentes, **caractérisé en ce que** le procédé comprend une étape lors de laquelle la position (Θ_{R}) du rotor et/ou la vitesse (n_{R}) du rotor déterminées sont comparées à des informations de capteur.

5. Dispositif de détermination d'état de rotor (10)
destiné à déterminer une position (θ_{R}) et une vitesse de rotation (n_{R}) d'un rotor d'une machine électrique, lors d'un court-circuit actif, la position de rotor (θ_{R}) correspondant à l'angle entre la direction de flux (d R ) du rotor par rapport au stator,
le dispositif de détermination d'état de rotor (10) étant conçu pour mettre en œuvre le procédé selon l'une quelconque des revendications précédentes, et comprenant :
- une unité de détermination de courant (14) pour déterminer les courants de court-circuit (I_{U}, I_{V}, I_{W}) se produisant en cas de court-circuit,
- une unité de détermination de courant total (18) pour déterminer un courant total (I_{α}, I_{β}) résultant des courants de court-circuit (I_{U}, I_{V}, I_{W}),
- une unité de détermination d'angle de courant de stator (22) pour déterminer un angle de courant de stator (ψₗ) du courant total (I_{α}, I_{β}) par rapport à un système de coordonnées de stator (α, β),
**caractérisé par**
- un dispositif de détermination d'angle de courant de rotor (26) pour déterminer un angle de courant de rotor (φ_{I}) du courant total (I_{α}, I_{β}) par rapport à une direction de flux (d_{R}) du rotor, le dispositif de détermination d'angle de courant de rotor (26) comprenant
- une unité de calcul (30) pour calculer une valeur absolue (I) du courant total (I_{α}, I_{β}), et
- une unité de corrélation d'angle de courant (34) pour déterminer l'angle de courant de rotor (φ_{I}) corrélé avec le courant total absolu (I),
- une unité de détermination de position de rotor (38) pour déterminer une position de rotor (θ_{R}),
- un dispositif de détermination de vitesse de rotor (42) pour déterminer une vitesse de rotor (n_{R}).

6. Dispositif de détermination d'état de rotor (10) selon la revendication 5, **caractérisé en ce que** le dispositif de détermination de vitesse de rotor (42) comprend une unité de lissage (46).

7. Dispositif de détermination d'état de rotor (19) selon la revendication 5 ou 6, **caractérisé en ce que** la machine électrique est une machine synchrone à aimants permanents, une machine synchrone à excitation électrique ou une machine synchrone à réluctance.

8. Dispositif de détermination d'état de rotor (10) selon l'une quelconque des revendications 5 à 7, **caractérisé en ce que** la machine électrique est triphasée.

9. Produit de programme informatique comportant des moyens à code de programme pour la mise en œuvre du procédé selon l'une quelconque des revendications 1 à 4, lorsque le produit de programme informatique est exécuté sur une unité de commande (14, 18, 22, 26, 38, 42) d'un dispositif de détermination d'état de rotor (10) selon l'une quelconque des revendications 5 à 8.

10. Support de stockage lisible par machine sur lequel est stocké le produit de programme informatique selon la revendication 9.
